# EUROPEAN PATENT APPLICATION

(11) **EP 4 339 483 A1**
(43) Date of publication of application: **20.03.2024**
(21) Application number: 23194440.6
(22) Date of filing: 31.08.2023
(51) Int. Cl.: F16F 9/32, F16F 9/18

(54) **VEHICLE-SUSPENSION SHOCK ABSORBER INCLUDING INTERNAL FORCE DISTRIBUTION**

(30) Priority: 08.09.2022 US 202217930540
(71) Applicant: DRiV Automotive Inc., Southfield MI 48034 (US)
(72) Inventor: SANCHEZ, Simon, Gijon (ES)
(74) Representative: AWA Sweden AB

(57) **Abstract**

A shock absorber (10) for a suspension system of a vehicle includes an intermediate tube (22) on an inner tube (12) defining an intermediate chamber (24) between the inner tube and the intermediate tube. The shock absorber includes an outer tube (26) and the inner tube and the intermediate tube are in the outer tube. The outer tube defines a reserve chamber (28) between the outer tube and the intermediate tube. A valve (30) fluidly connects the intermediate chamber and the reserve chamber. An elongated slot (32) is in the outer tube between the valve and the reserve chamber.

## Description

### BACKGROUND

Shock absorbers in vehicle suspension systems are subject to large forces during operation of the vehicle, especially during vehicle cornering and braking. The shock absorbers are designed to withstand these forces and design factors for these considerations include material thickness and material type and quality. Specifically, the shock absorbers include concentric tubes through which a working fluid flows during rebound and compression movements of the shock absorber. As examples, the thickness of these tubes may be increased and/or the material type of the tubes, including relatively expensive material types, may employed to withstand forces associated with the compression and rebound of the shock absorber and the flow of the working fluid. As another example, additional components may be added to the shock absorber to withstand forces during operation and to route and control the flow of the working fluid.

These solutions to the withstand high operational forces may increase the cost, complexity, and/or weight of the shock absorber. These solutions may also increase the size of the shock absorber, which can create packaging difficulties in the assembled vehicle. In addition, hybrid-electric vehicles and battery-electric vehicles may be heavier than internal-combustion propelled vehicles, leading to an increase in operational forces on the shock absorber of the vehicle suspension system.

### BRIEF DESCRIPTION OF THE DRAWINGS

Figure 1 is a perspective view of a vehicle including a suspension system.
Figure 2 is a cross-sectional view of the shock absorber.
Figure 3 is magnified view of a portion of Figure 3.
Figure 4 is an exploded view of a portion of the shock absorber.
Figure 5 is an exploded view of a portion of the shock absorber.
Figure 6 is an exploded view of a portion of the shock absorber.
Figure 7 is a cross-sectional view of the shock absorber.
Figure 8 is a perspective view of the shock absorber with a valve and valve housing shown in broken lines to show flow of working fluid.
Figure 9 is a schematic of a system of a vehicle including an electronic control unit that controls operation of the valve of the shock absorber.

### DETAILED DESCRIPTION

With reference to the Figures, wherein like numerals indicate like parts throughout the several views, a shock absorber 10 includes an inner tube 12 defining an inner volume 14. A piston 16 is slidably disposed in the inner tube 12. The piston 16 divides the inner volume 14 of the inner tube 12 into a rebound working chamber 18 and a compression working chamber 20. An intermediate tube 22 is on the inner tube 12 defining an intermediate chamber 24 between the inner tube 12 and the intermediate tube 22. The intermediate chamber 24 is in fluid communication with the inner volume 14 of the inner tube 12. The shock absorber 10 includes an outer tube 26. The inner tube 12 and the intermediate tube 22 are in the outer tube 26. The outer tube 26 defines a reserve chamber 28 between the outer tube 26 and the intermediate tube 22. A valve 30 fluidly, i.e., hydraulically, connects the intermediate chamber 24 and the reserve chamber 28. An elongated slot 32 is in the outer tube 26 between the valve 30 and the reserve chamber 28.

The elongated slot 32 allows for flow of working fluid between the reserve chamber 28 and the valve 30. Specifically, during a rebound stroke, the working fluid flows through the elongated slot 32 from the reserve chamber 28 to the valve 30.

The elongated slot 32 supports internal components of the shock absorber 10. Specifically, the elongated slot 32 supports forces of internal components on the outer tube 26. The elongated slot 32 distributes forces of internal components during operation of the vehicle 36. This allows for the possibility of decreased thickness of the outer tube 26 and/or intermediate tube 22, simpler design of the components of the shock absorber 10 that are subject to operational forces and/or that control the flow of the working fluid, and overall size reduction of the shock absorber 10. As an example, in the example shown in the figures, the shock absorber 10 includes a transfer ring 34 supported by the elongated slot 32. The elongated slot 32 distributes forces from the transfer ring 34 across an area of the outer tube 26 to manage operational forces during rebound stroke of the shock absorber 10.

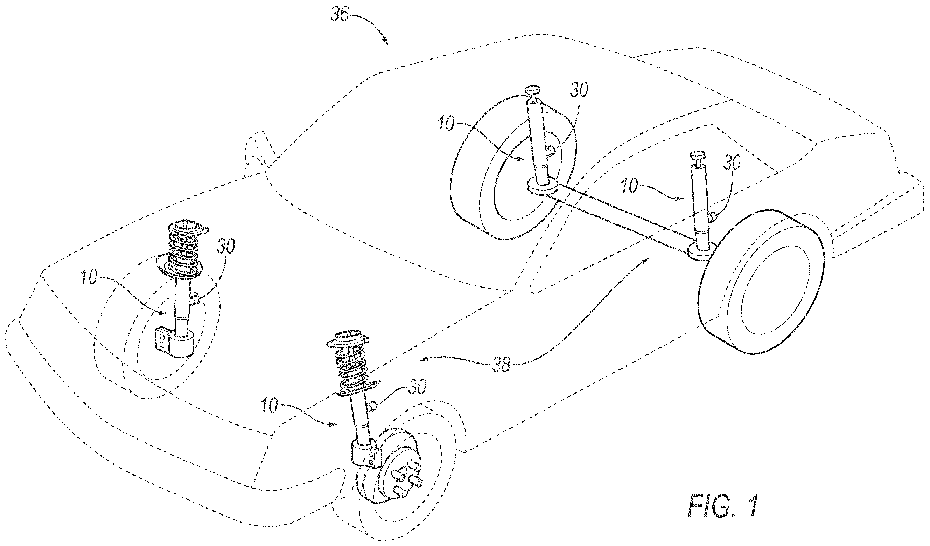

The shock absorber 10 continuously adjusts damping levels according to road conditions and vehicle dynamics to dampen shocks and vibrations from variation in the road surface felt by occupants of the vehicle 36. Figure 1 shows an example of the vehicle 36 having a suspension system 62 38 and a body. The suspension system 62 38 may include more than one shock absorber 10. Each shock absorber 10 may be coupled with a coil spring. The performance of the shock absorber 10 is electronically controlled, specifically with damping levels controlled by an electronic control unit (ECU 40). The ECU 40 receives information (e.g., acceleration, speed, pitch, yaw, roll, steering, braking) from sensors 42 various locations on the vehicle 36 to make independent adjustments to each shock absorber 10.

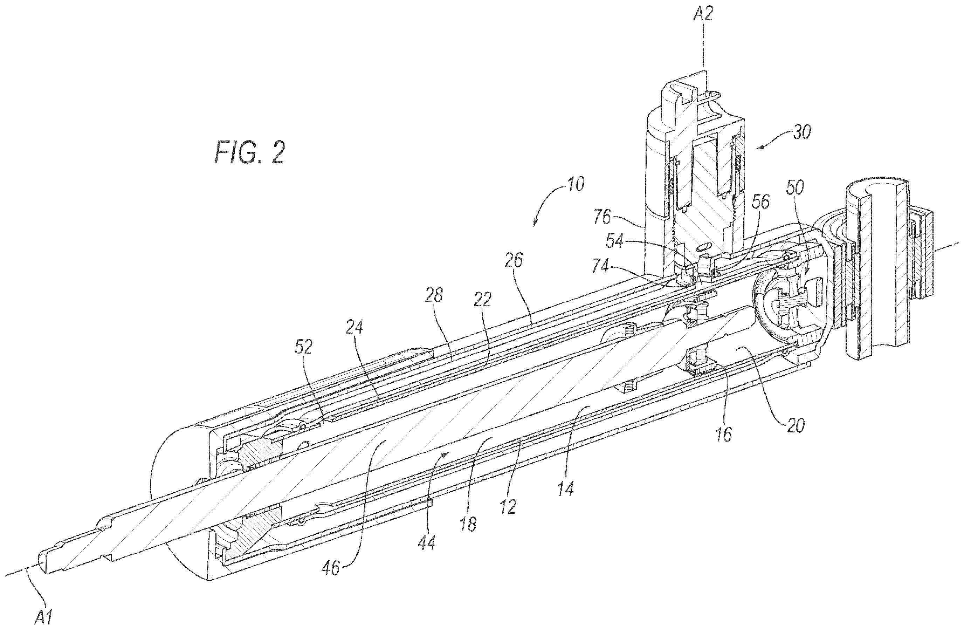

With reference to Figure 2, the intermediate tube 22 is on the inner tube 12 defining the intermediate chamber 24 between the inner tube 12 and the intermediate tube 22. The inner tube 12 and the intermediate tube 22 are in the outer tube 26. The inner tube 12, the outer tube 26, and the intermediate tube 22 may be concentric. The outer tube 26 and the inner tube 12 define the reserve chamber 28 between the outer tube 26 and the inner tube 12 and between the outer tube 26 and the intermediate tube 22. The reserve chamber 28 may be annular and continuous about the inner tube 12 and the intermediate tube 22. The inner tube 12 defines the inner volume 14, which is selectively in communication with the reserve chamber 28. Specifically, the inner tube 12 and the intermediate tube 22 define the intermediate chamber 24 that is open to the inner volume 14 and selectively in communication with the reserve chamber 28 through the valve 30, as described further below.

The rebound working chamber 18, the intermediate chamber 24, and the reserve chamber 28 contain a working fluid, e.g., a liquid such as hydraulic oil and/or gas. The working fluid flows from the rebound working chamber 18 and the reserve chamber 28 through the valve 30 and the intermediate chamber 24 to adjust damping levels of the shock absorber 10. The valve 30 provides one-way flow from the rebound working chamber 18 to the reserve chamber 28, i.e., active valving. The shock absorber 10 includes passive valves as described further below.

With continued reference to Figure 2, the shock absorber 10 includes a piston assembly 44 including a rod 46 and a piston 16. The piston 16 is in the inner tube 12 and the rod 46 extends externally of outer tube 26 through a rod guide assembly (not numbered). The piston 16 is slidably disposed in the inner tube 12. The piston 16 divides the inner volume 14 of the inner tube 12 into the rebound working chamber 18 and the compression working chamber 20. The compression working chamber 20 may contain the working fluid and the piston 16 may allow for controlled flow of the working fluid through and/or around the piston 16 between the compression working chamber 20 and the rebound working chamber 18. For example, the piston 16 may include flow-control features such as channels, spring plates, blow-off plates, valve 30, etc., that allow flow of the working fluid between the compression working chamber 20 and the rebound working chamber 18 and may provide controlled resistance to such flow.

With continued reference to Figure 2, the shock absorber 10 may include a base valve 50. The base valve 50 is between the compression working chamber 20 and the reserve chamber 18. Specifically, the base valve 50 has ports between the working chamber 20 and the reserve chamber 18 and flow-control features that allow for controlled flow of the working fluid through and/or around the base valve 50 between the compression working chamber 20 and the reserve chamber 18. For example, the flow-control features of the base valve 50 may include channels, spring plates, blow-off plates, valves, etc., that allow flow of the working fluid between the compression working chamber 20 and the reserve chamber 18 and may provide controlled resistance to such flow.

The working fluid in the inner volume 14 flows between the rebound working chamber 18 and the reserve chamber 28 and flow from the rebound working chamber 18 to the reserve chamber 28 is actively controlled by the valve 30. During rebound of the shock absorber 10, the piston 16 reduces the rebound working chamber 18 and expands the compression working chamber 20. This movement compresses working fluid in the rebound working chamber 18 and the working fluid flows from the rebound working chamber 18 to the reserve chamber 28 as controlled by the valve 30. During this movement, the working fluid may also flow through and/or around the piston 16 from the rebound working chamber 18 to the compression working chamber 20 and/or the working fluid may flow through and/or around the base valve 50 from the reserve chamber 28 to the compression working chamber 20. During compression of the shock absorber 10, the piston 16 expands the rebound working chamber 18 and reduces the compression working chamber 20. During this movement, the working fluid may flow through and/or around the piston 16 from the compression working chamber 20 to the rebound working chamber 18 and/or the working fluid may flow through and/or around the base valve 50 from the compression working chamber 20 to the reserve chamber 28. As set forth above, the valve 30 is a one-way valve that controls flow of the working fluid from the rebound working chamber 18 to the reserve chamber 28 and thus the working fluid does not flow through the valve 30 during the compression stroke of the shock absorber 10.

The inner tube 12, the intermediate tube 22, and the outer tube 26 may each be tubular, as shown in Figure 2. Specifically, the inner tube 12, the intermediate tube 22, and the outer tube 26 may have a circular cross-section and may have a cylindrical shape. The inner tube 12, the intermediate tube 22, and the outer tube 26 may be elongated along an axis A1. Specifically, the inner tube 12, the intermediate tube 22, and the outer tube 26 may be coaxial on the axis A1 and concentric about the axis A1. The inner tube 12, the intermediate tube 22, and the outer tube 26 may be, for example, metal or other rigid material as is known.

As set forth above, the inner tube 12 defines the inner volume 14. Specifically, the inner tube 12 has an inner wall and the piston 16 abuts the inner wall. The piston assembly 44 may include one or more seals, e.g., metal rings, between the piston 16 and the inner wall of the inner tube 12.

The inner tube 12 contains the working fluid. The working fluid leaves the inner tube 12 and flows into the intermediate tube 22, as described further below, during operation of the shock absorber 10. In addition, the working fluid may leave the inner tube 12 and flow into other dampening features, but in any event, the working fluid does not exit the shock absorber 10 under normal operation.

The rod 46 of the piston assembly 44 extends through one end of the inner tube 12. The shock absorber 10 includes seals between the rod 46 and the inner tube 12 to contain the working fluid in the inner tube 12.

The inner volume 14 is in fluid communication with the intermediate chamber 24. Specifically, in the example shown in the figures, the rebound working chamber 18 is in fluid communication with the intermediate chamber 24. For example, the inner tube 12 has an orifice 52 from the rebound working chamber 18 to the intermediate chamber 24 between the inner tube 12 and the intermediate tube 22. The orifice 52 is open to the intermediate chamber 24 and the rebound working chamber 18 so that the working fluid may flow through the orifice 52. The inner tube 12 may have any suitable number of orifices 52 between the rebound working chamber 18 and the intermediate chamber 24. The orifice 52 defines a contact area that represents the two-dimensional area through which the working fluid flows.

The intermediate tube 22 is tubular and extend circumferentially around the inner tube 12, e.g., concentric with the inner tube 12. The intermediate tube 22 may be referred to as a "transfer tube." The intermediate tube 22 is sealed to the inner tube 12 at two ends of the intermediate tube 22 spaced along the axis A1. The intermediate tube 22 is radially spaced from the inner tube 12 to define the intermediate chamber 24 therebetween. The intermediate chamber 24 may be annular and continuous about the inner tube 12. The intermediate chamber 24 allows the working fluid to flow between the rebound working chamber 18 and the valve 30. As set forth above, the intermediate chamber 24 is in fluid communication with the inner volume 14 of the inner tube 12, e.g., the rebound working chamber 18, through, for example, the orifice 52.

The outer tube 26 is tubular and extends circumferentially around the intermediate tube 22 and the inner tube 12, e.g., concentric with the intermediate tube 22 and the inner tube 12. The outer tube 26 is radially spaced from the intermediate tube 22 and the inner tube 12 to define the reserve chamber 28 therebetween. Specifically, in the example shown in the figures, the reserve chamber 28 is longer than the intermediate tube 22 along the axis A1 so that a portion of the reserve chamber 28 extends directly between the outer tube 26 and the intermediate tube 22 and a portion of the reserve chamber 28 extends directly between the outer tube 26 and the inner tube 12. The outer tube 26 is sealed at ends to contain the working fluid. The reserve chamber 28 may be annular and continuous about the intermediate tube 22 and the inner tube 12. The working fluid flows into and out of the reserve chamber 28 from the valve 30, as described below.

The intermediate tube 22 allows the working fluid to flow between the intermediate chamber 24 and the valve 30. For example, the intermediate tube 22 has an orifice 54 from the intermediate chamber 24 to the valve 30. The orifice 54 is open to the intermediate chamber 24 and the valve 30 so that the working fluid may flow through the orifice 54 based on operation of the valve 30. The valve 30 controls flow of the working fluid from the intermediate chamber 24 to the reserve chamber 28 and from the reserve chamber 28 to the intermediate chamber 24.

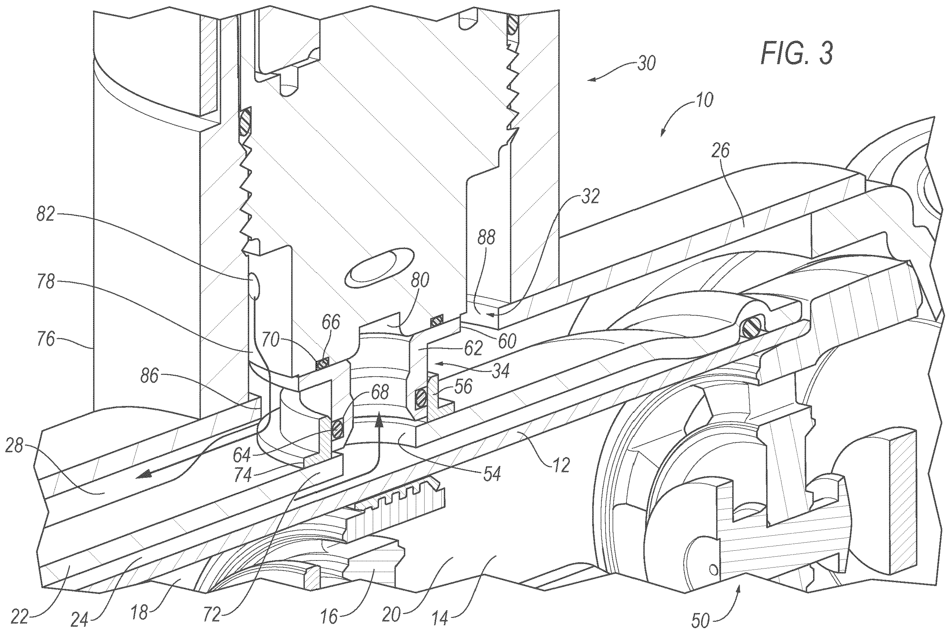

With reference to Figure 3, the intermediate chamber 24 is in communication with the valve 30 through components extending through the elongated slot 32 and supported by the outer tube 26 along the elongated slot 32. In the example shown in the figures, the shock absorber 10 includes the transfer ring 34 extending between the intermediate tube 22 and the valve 30. Specifically, in the example shown in the figures, the shock absorber 10 includes the transfer ring 34 and a stud 56 between the intermediate tube 22 and the valve 30 and, in combination, extending from the intermediate tube 22 to the valve 30. The transfer ring 34 and the stud 56 fluidly connect the intermediate chamber 24 and the valve 30. Specifically, transfer ring 34 and the stud 56 in combination define a bore 58 extending from intermediate chamber 24 to the valve 30. The transfer ring 34 defines one portion of the bore 58 and the stud 56 defines another portion of the bore 58. The bore 58 may be axial along an axis A2. The transfer ring 34 and the stud 56, i.e., the bore 58, provides uninterrupted fluid communication between the intermediate chamber 24 and the valve 30. The transfer ring 34 and the stud 56 extend from the intermediate tube 22 through the reserve chamber 28 to the valve 30 and the bore 58 extends uninterrupted from the orifice of the intermediate tube 22 to the valve 30 (specifically a second port 82 of the valve 30, as described further below).

The transfer ring 34 and the stud 56 extend radially relative to the intermediate tube 22 from the intermediate tube 22 through elongated slot 32 of the outer tube 26. In other words, the combined length of the transfer ring 34 and the stud 56 from the intermediate tube 22 to the valve 30 is larger than the radial thickness of the reserve chamber 28.

The transfer ring 34 provides fluid communication between the intermediate chamber 24 and the valve 30. The transfer ring 34 may also be referred to as a "hydraulic connection." The working fluid flows through transfer ring 34 from the intermediate chamber 24 to the valve 30 and from the valve 30 to the intermediate chamber 24. The transfer ring 34 is sealed to the valve 30 and is sealed to the intermediate chamber 24, as described further below.

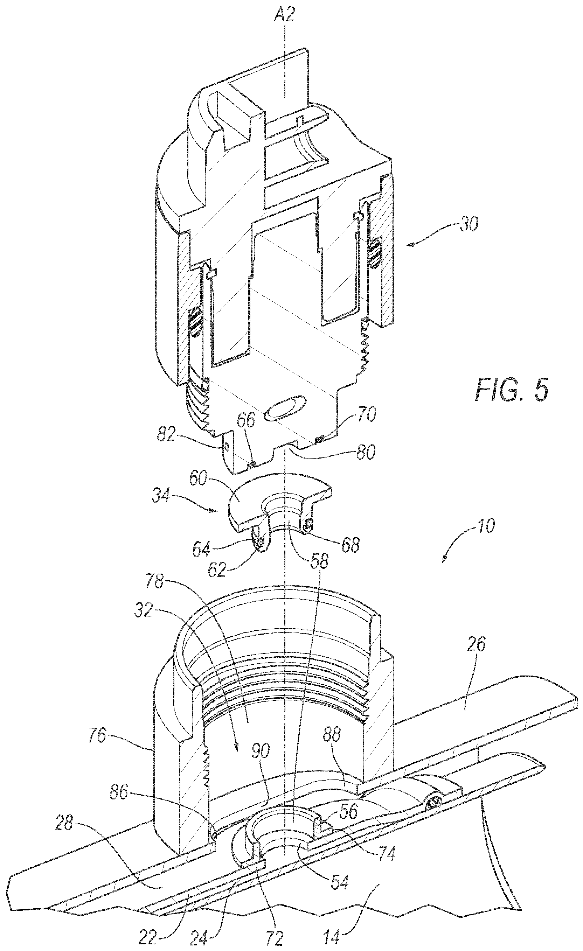

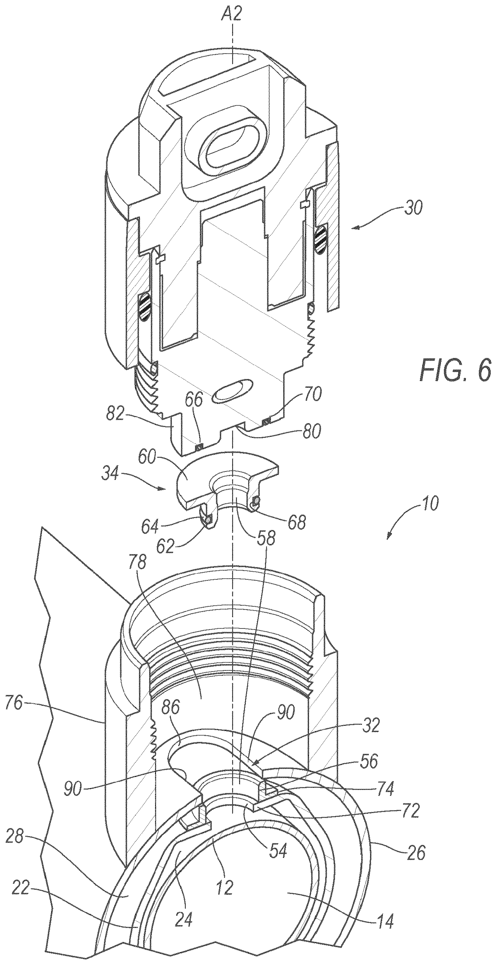

With reference to Figures 3-8, the transfer ring 34 includes a shoulder 60 and a stem 62. The bore 58 extends through both the shoulder 60 and the stem 62. Specifically, the shoulder 60 and the stem 62 may be coaxial on the axis A2. The outer diameter of the shoulder 60 is greater than the outer diameter of the stem 62. The shoulder 60 is disposed at the valve 30 and the stem 62 is disposed at the stud 56.

The transfer ring 34 is sealed to the valve 30 and to the stud 56 to contain the working fluid in the bore 58 between the valve 30 and the stud 56. For example, the shock absorber 10 may include a first seal 64 between the transfer ring 34 and the valve 30 and a second seal 66 between the transfer ring 34 and the stud 56. The shock absorber 10 may include seal seats supporting the seals. In the example shown in the figures, the valve 30 defines a first seal seat 68 supporting the first seal 64 and the transfer ring 34 defines a second seal seat 70 supporting the second seal 66. In other examples, the transfer ring 34 may include a seal seat supporting the second seal 66 and/or the stud 56 may include a seal seat supporting the first seal 64.

The first seal 64 seals the transfer ring 34 to the stud 56 and the second seal 66 seals the transfer ring 34 to the valve 30. Specifically, the first seal 64 seals the stem 62 to the stud 56 and the second seal 66 seals the shoulder 60 to the valve 30. In other words, the first seal 64 prevents flow of working fluid between the stem 62 and the stud 56 and the second seal 66 prevents flow of working fluid between the shoulder 60 and the valve 30. The first seal 64 and the second seal 66 extend endlessly around the bore 58. As an example, as shown in the example in the figures, the first seal 64 and the second seal 66 are annular around the bore 58.

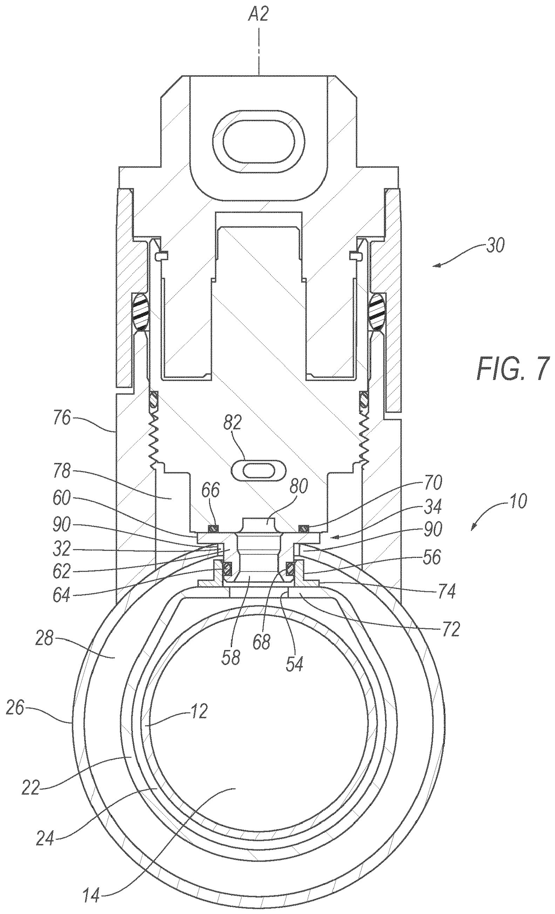

The stud 56 is fixed to the intermediate tube 22. Specifically, the stud 56 is sealed to the intermediate tube 22 to prevent leakage of working fluid between the stud 56 and the intermediate tube 22. The stud 56 may be, for example, welded, adhered, or bonded to the intermediate tube 22. The orifice of the intermediate tube 22 is open to the bore 58 of the stud 56. The stud 56 is between intermediate tube 22 and the elongated sides 90 of the elongated slot 32, as shown in Figure 7.

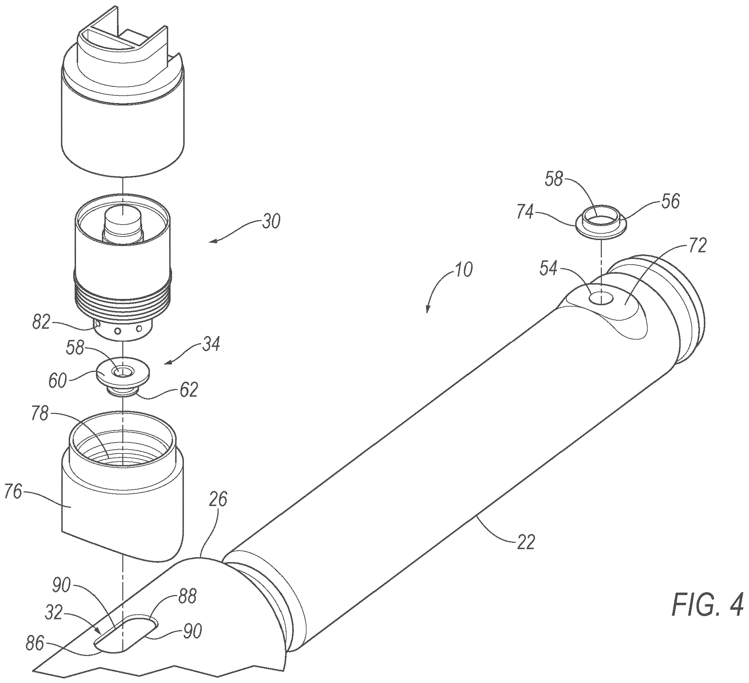

The stud 56 has a shape that mates with the intermediate tube 22. As an example, with reference to Figure 4, the intermediate tube 22 includes a flat 72 defining the office 54. In such an example, the stud 56 is fixed to the intermediate tube 22 at the flat 72. Specifically, the flat 72 generally planar and the stud 56 includes a base 74 that is generally planar and abuts the flat 72. The flat 72 and the base 74 are sized and shaped so that the stud 56 may be fixed to and sealed to the flat 72 as described above.

The stud 56 and the transfer ring 34 are designed to mate with each other. In the example shown in the figures, the stud 56 receives the transfer ring 34 and the first seal 64 extends radially outward from the transfer ring 34 to the stud 56. In other words, the transfer ring 34 is the male portion and the stud 56 is the female portion of a male-female connection between the stud 56 and the transfer ring 34. In other examples, the transfer ring 34 may receive the stud 56, in which case the first seal 64 extends radially outward from the stud 56 to the transfer ring 34. The male-female connection between the stud 56 and the transfer ring 34 transfers forces therebetween and retains engagement when subjected to forces during rebound and compression strokes of the shock absorber 10.

With continued reference to Figures 2 and 3, the shock absorber 10 includes a valve housing 76 sealed to the outer tube 26 and sealed to the valve 30. The valve housing 76 may be fixed to the outer tube 26 by, for example, welding, adhesive, bonding, etc. The valve housing 76 is open to the reserve chamber 28. Specifically, the valve housing 76 has a cavity 78 open to the reserve chamber 28. The valve 30 is open to the reserve chamber 28 through the valve housing 76 so that the working fluid may flow through the valve housing 76 from the valve 30 to the reserve chamber 28 and from the reserve chamber 28 to the valve 30. Specifically, the valve housing 76 is sealed to the outer tube 26 around the elongated slot 32 and is sealed to the valve 30. The valve housing 76 surrounds the elongated slot 32 and is sealed to the outer tube 26 completely around the elongated to contain the working fluid in the outer tube 26 and the cavity 78 of the valve housing 76. The transfer ring 34 and/or the valve 30 extends through the elongated slot 32. In the example shown in the figures, the transfer ring 34 extends through the elongated slot 32 from the stud 56 into the cavity 78 of the valve housing 76 to the valve 30. The elongated slot 32 is spaced from the transfer ring 34 defining a flow path therebetween, as described further below. The flow path is open between the cavity 78 of the valve housing 76 and the reserve chamber 28 to allow the working fluid to flow from the cavity 78 to the reserve chamber 28 and from the reserve chamber 28 to the cavity 78.

The valve 30 is fluidly connected to the rebound working chamber 18 and the reserve chamber 28. Specifically, the valve 30 fluidly connects the intermediate chamber 24 and the reserve chamber 28.

The valve 30 is in the cavity 78 of the valve housing 76 and is sealed to the bore 58 of the transfer ring 34. Specifically, the valve 30 includes a first port 80 in the cavity 78 of the valve housing 76 a second port 82 at the bore 58 of the transfer ring 34. The second port 82 supplies the working fluid to the cavity 78 of the valve housing 76 from the first port 80 as controlled by the valve 30. Specifically, the second port 82 is in communication with the elongated slot 32 through the cavity 78. The first port 80 supplies the working fluid to the bore 58 of the transfer ring 34 and receives the working fluid from the bore 58 of the transfer ring 34 as controlled by the valve 30. The valve 30 may include more than one second port 82, e.g., a plurality of first ports 82 spaced circumferentially around the valve 30 and each connected to the first port 80.

The valve 30 controls flow through the valve 30 from the first port 80 to the second port 82. The valve 30 may be electrically activated, i.e., with power from an electrical source of the vehicle 36, to open and close communication between the first port 80 and the second port 82. In other words, the valve 30 may be an electric valve. The valve 30 may be, for example, include a solenoid that opens and closes communication between the first port 80 and the second port 82 and/or may have any suitable features for opening and closing communication between the first port 80 and the second port 82 including those that are known.

The valve 30 may have a variable-flow resistance to vary flow rate through the valve 30. In other words, the valve 30 may be a flow-control valve. Specifically, the valve 30 is configured to vary flow rate through the valve 30 from the first port 80 to the second port 82. In other words, the valve 30 may open and close and may adjust the flow rate from the first port 80 to the second port 82 to varying flow of working fluid therethrough, specifically with no flow when the valve 30 is closed and with variable flow rate based on the variable open position of the valve 30. The variable-flow may be accomplished by adjustment of the size of the flow path through the valve 30. Specifically, the variable-flow resistance may be accomplished by varying the size of an orifice in the valve 30 between the first port 80 and the second port 82. As an example, the valve 30 may be an electric flow-control valve 30. In such an example, the valve 30 includes a solenoid that varies the size of the orifice in the valve 30 between the first port 80 and the second port 82.

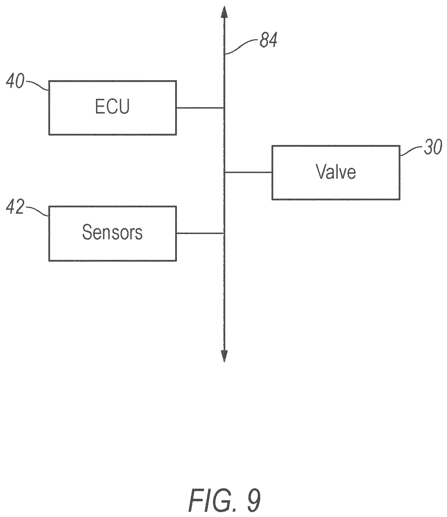

The variable flow resistance may be adjusted based on conditions to vary dampening by the shock absorber 10. Specifically, the shock absorber 10 may include the electronic-control unit 40 (Fig. 9) that controls the valve 30. In examples in which the valve 30 is an electric flow-control valve 30 with a solenoid, the solenoid is operably controlled by the ECU 40. The ECU 40 receives information (e.g., acceleration, speed, pitch, yaw, roll, steering, braking) from the vehicle 36 and adjusts the valve 30 (i.e., sets the valve 30 at the closed position or any variable open position) to adjust flow through the valve 30. For example, the ECU 40 may cause the valve 30 to restrict flow of the working fluid through the reserve chamber 28 to provide a harder ride or provide less restriction through the reserve chamber 28 to provide a softer ride. The information from the vehicle 36 that is used to control the operation of the valve 30 is detected by sensors 42 of the vehicle 36 at various locations on the vehicle 36. In examples including multiple shock absorbers 10, each shock absorber 10 may be independently operable at a different flow to independently change the damping rate to adapt to varying road conditions. In such examples, the multiple shock absorbers 10 may each include an ECU 40 dedicated to the respective shock absorber 10 or multiple shock absorbers 10 may share one ECU 40.

The ECU 40 may be a computer having a processor and a storage medium storing instructions executable by the processor to deploy the airbag. The ECU 40 may, for example, a suspension control module including electronic hardware including, for example, electronic hardware that is known. The storage medium may be any non-transitory computer-readable storage medium or machine-readable storage medium, such as an optical, magnetic or semiconductor storage medium. In various implementations, the storage medium may be an article of manufacture. In some implementations, storage medium may store computer-executable instructions, such as computer-executable instructions to implement logic flow. Examples of a computer-readable storage medium or machine-readable storage medium may include any tangible media capable of storing electronic data, including volatile memory or nonvolatile memory, removable or non-removable memory, erasable or non-erasable memory, writeable or re-writeable memory, and so forth. Examples of computer-executable instructions may include any suitable type of code, such as source code, compiled code, interpreted code, executable code, static code, dynamic code, object-oriented code, visual code, and the like. The vehicle 36 includes a communication network 84 that can include a bus in the vehicle 36 such as a controller area network (CAN) or the like, and/or other wired and/or wireless mechanisms. Via the vehicle network, the computer may transmit messages to various devices in the vehicle 36 and/or receive messages (e.g., CAN messages) from the various devices, e.g., sensors 42, an actuator, a human machine interface (HMI), etc.

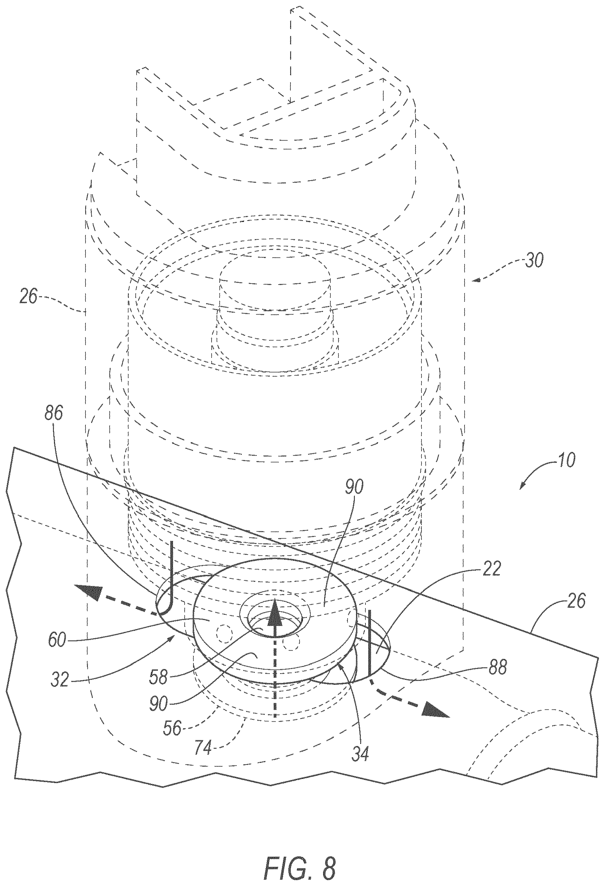

Figures 3 and 8 show the flow path for a rebound stroke with fluid flow of the working fluid identified by arrows. In a rebound stroke, the piston 16 moves away from the compression working chamber 20 and the working fluid is pressurized in the rebound working chamber 18. The valve 30 is selectively opened, in which case working fluid flows from the rebound working chamber 18, through the orifice 52, through the intermediate chamber 24, through the orifice 54, into the bore 58 of the transfer ring 34, to the valve 30. The valve 30 controls flow of the working fluid from the first port 80 to the second port 82. When the valve 30 allows flow of working fluid from the first port 80 to the second port 82, the working fluid flows from the second port 82, into the cavity 78 of the valve housing 76, and through the elongated slot 32 into the reserve chamber 28.

In a rebound stroke, pressure in the compression working chamber 20 is reduced. In examples including flow-control features on the piston 16 and/or the base valve 50, the flow control features may allow the working fluid to flow from rebound working chamber 18 to the compression working chamber 20 through and/or around the piston 16 and from the reserve chamber 28 to the compression working chamber 20 through and/or around the base valve 50 during the rebound stroke.

In a compression stroke, pressure in the compression working chamber 20 is increased. The valve 30 does not allow flow of the working fluid from the reserve chamber 28 to the intermediate chamber 24 through the valve 30. In examples including flow-control features on the piston 16 and/or the base valve 54, the flow control features may allow the working fluid to flow from compression working chamber 20 to the rebound working chamber 18 through and/or around the piston 16 and from the compression working chamber 20 to the rebound working chamber 18 and through and/or around the base valve 50 from the compression working chamber 20 to the reserve chamber 28. In examples including the floating piston 50, increase in pressure in the rebound working chamber 18 compresses the gas chamber 48 with the floating piston 50.

As set forth above, the elongated slot 32 in the outer tube 26 between the valve 30 and the reserve chamber 28. The elongated slot 32 has a first end 86 and a second end 88 spaced from each other. The elongated slot 32 is elongated from the first end 86 to the second end 88, i.e., the longest dimension of the elongated slot 32 is from the first end 86 to the second end 88. In the example shown in the figures, the elongated slot 32 is elongated along the axis A1. The first end 86 and the second end 88 are each spaced from the valve 30, the transfer ring 34, and the stud 56 along the axis A1. The first end 86 and the second end 88 of the elongated slot 32, being spaced from the valve 30, the transfer ring 34, and the stud 56, define the flow paths between the cavity 78 of the valve housing 76 and the reserve chamber 28, as shown in Figure 8. The elongated slot 32 has a length along the axis A1 and the transfer ring 34 may be centered on the length, as shown in the example in the figures.

The elongated slot 32 has elongated sides 90 spaced from each other and each extending from the first end 86 to the second end 88 of the elongated slot 32. The elongated sides 90 may be straight from the first end 86 to the second end 88, as shown in the example in the figures. The elongated sides 90 are parallel to the longest dimension of the elongated slot 32. In the example shown in the figures, the elongated slot 32s are parallel to the axis A1.

As set forth above, the elongated slot 32 supports internal components of the shock absorber 10, and more specifically, the elongated sides 90 of the elongated slot 32 support the internal components of the shock absorber 10. Specifically, in the example shown in the figures, the transfer ring 34 has a flange abutting the elongated sides 90 of the elongated slot 32. The elongated sides 90 support forces of the transfer ring 34 on the outer tube 26. The abutting and support of the flange of the transfer ring 34 on the elongated sides 90 of the elongated slot 32 distributes forces of transfer ring 34 during compression stroke and rebound stroke of the shock absorber 10. Specifically, the interaction between the flange and the elongated sides 90 increases the contact area and thus distributes loading of the transfer ring 34 on the outer tube 26.

The disclosure has been described in an illustrative manner, and it is to be understood that the terminology which has been used is intended to be in the nature of words of description rather than of limitation. Many modifications and variations of the present disclosure are possible in light of the above teachings, and the disclosure may be practiced otherwise than as specifically described.

## Claims

1. A shock absorber (10) comprising:
an inner tube (12) defining an inner volume (14);
a piston (16) slidably disposed in the inner tube, the piston dividing the inner volume of the inner tube into a rebound working chamber (18) and a compression working chamber (20);
an intermediate tube (22) on the inner tube defining an intermediate chamber (24) between the inner tube and the intermediate tube, the intermediate chamber being in fluid communication with the inner volume of the inner tube;
an outer tube (26);
the inner tube and the intermediate tube being in the outer tube, the outer tube defining a reserve chamber (28) between the outer tube and the intermediate tube;
a valve (30) fluidly connecting the intermediate chamber and the reserve chamber;
an elongated slot (32) in the outer tube between the valve and the reserve chamber.

2. The shock absorber of claim 1, wherein the inner tube is elongated along an axis (A1) and the elongated slot is elongated along the axis.

3. The shock absorber of claim 2, wherein the elongated slot has a first end (86) and a second end (88), the first end and the second end being spaced from each other along the axis and spaced from the valve along the axis.

4. The shock absorber of claim 1, further comprising a transfer ring (34) sealed to the valve and having a bore (58) in fluid communication with the valve and the intermediate chamber, the transfer ring extending from the valve through the elongated slot.

5. The shock absorber of claim 4, wherein the elongated slot has elongated sides (90) and the transfer ring has a flange abutting the elongated sides of the slot.

6. The shock absorber of any one of claims 1-5, further comprising a stud (56) fixed to the intermediate tube, the intermediate tube having an orifice open the intermediate chamber, the stud having a bore in fluid communication with the orifice, the valve being in fluid communication with the bore of the stud.

7. The shock absorber of claim 6, wherein the intermediate tube includes a flat (72) defining the office, the stud being fixed to the intermediate tube at the flat.

8. The shock absorber of claim 6, wherein the slot has elongated sides and the stud is between intermediate tube and the elongated sides of the slot.

9. The shock absorber of claim 6, further comprising a transfer ring (34) sealed to the valve and having a bore in fluid communication with the valve and the intermediate chamber, the transfer ring extending from the valve through the elongated slot and into the stud.

10. The shock absorber of claim 9, wherein the transfer ring is sealed to bore of the stud.

11. The shock absorber of claim 10, wherein the elongated slot has a first end (86) and a second end (88), the first end and the second end being spaced from each other along the axis and spaced from the transfer ring along the axis.

12. The shock absorber of claim 11, wherein the elongated slot has a length along the axis and the transfer ring is centered on the length.

13. The shock absorber of any one of claims 1-5, further including a valve housing (76) sealed to the outer tube, the valve housing surrounding the elongated slot.

14. The shock absorber of any one of claims 1-5, wherein the valve has a first port (80) in communication with the slot and a second port (82) in communication with the intermediate chamber.

15. The shock absorber of claim 14, further including a valve housing (76) sealed to the outer tube, the valve housing surrounding the elongated slot and the first port of the valve.
